Europäisches Patentamt

European Patent Office

Office européen des brevets

(19)

(11) Numéro de publication: **0 077 239**
**B1**

## (12) FASCICULE DE BREVET EUROPEEN

(45) Date de publication du fascicule du brevet:
**02.05.85**

(21) Numéro de dépôt: **82401755.2**

(22) Date de dépôt: **28.09.82**

(51) Int. Cl.⁴: **H 04 N 5/21,** H 04 N 9/09

(54) **Dispositif de correction spatiale pour analyseur d'images.**

(30) Priorité: **02.10.81 FR 8118638**

(43) Date de publication de la demande:
**20.04.83 Bulletin 83/16**

(45) Mention de la délivrance du brevet:
**02.05.85 Bulletin 85/18**

(84) Etats contractants désignés:
**BE DE GB**

(56) Documents cités:
**FR - A - 2 070 713**
**FR - A - 2 498 858**
**GB - A - 1 353 147**

(73) Titulaire: **THOMSON-CSF, 173, Boulevard Haussmann,
F-75379 Paris Cedex 08 (FR)**

(72) Inventeur: **Labb, Georges, THOMSON-CSF SCPI 173, bld
Haussmann, F-75379 Paris Cedex 08 (FR)**

(74) Mandataire: **Lincot, Georges et al, THOMSON-CSF
SCPI 173, Bld Haussmann, F-75379 Paris Cedex 08 (FR)**

ACTORUM AG

## Description

La présente invention concerne un dispositif de correction spatiale pour analyseur d'images.

On entend par correction spatiale la correction de défauts, dus à l'analyseur, qui se traduisent par une distorsion spatiale entre image analysée et image restituée par l'analyseur. A titre d'exemple, on peut citer les défauts de convergence, de géométrie ou de tache.

Les défauts de convergence se rencontrent seulement dans les analyseurs d'images couleurs. Ils sont dus à une superposition imparfaite, sur le support de restitution de l'image, des faisceaux d'électrons associés à chacune des trois couleurs fondamentales et ils se traduisent par la présence de franges colorées sur les contours des objets.

Les défauts de géométrie et de tache se rencontrent dans tous les analyseurs d'images, qu'ils fonctionnent en noir et blanc ou en couleurs, et sont dus à des imperfections du système d'analyse lui-même. Les défauts de géométrie se traduisent par une déformation géométrique de l'image restituée par rapport à l'image analysée, et les défauts de tache se traduisent par la présence d'un fond d'un gris non constant sur l'image restituée lorsque l'image analysée est un fond d'un gris constant.

Un dispositif de correction de défauts de convergence pour caméra couleurs a fait l'objet d'une demande de brevet français N° 81.01287 déposée au nom de la titulaire et publié le 30.7.1982 sou sle numéro FR-A 2498853. Ce dispositif comporte essentiellement une mémoire, dite mémoire de correction, apte à stocker, pour chacun des rectangles résultant d'un quadrillage de l'écran de la caméra en M groupes de L lignes chacun et en N colonnes, un signal prédéterminé de correction de balayage horizontal et un signal prédéterminé de correction de balayage vertical propres à chacune de deux des trois couleurs fondamentales, et un séquenceur pour commander l'application de ces signaux de correction aux moyens de balayage lors du passage des moyens de balayage par les rectangles correspondants de l'écran. Des moyens d'atténuation des discontinuités existant entre signaux de correction de balayage horizontal et vertical associés à des lignes adjacentes d'une même colonne sont également prévus de manière à éviter des rapprochements ou des écartements trop brusques des lignes lors des transitions entre les différentes valeurs des signaux de correction correspondants. Deux exemples de réalisation de ces moyens d'atténuation sont donnés. Un exemple de réalisation en analogique consiste à atténuer ces discontinuités au moyen de filtres du type R.C. Un exemple de réalisation en numérique consiste à atténuer ces discontinuités en faisant une intégration des signaux de correction au moyen d'un additionneur et d'une mémoire, dite mémoire d'intégration, associés à la mémoire de correction.

Selon encore un autre exemple de réalisation décrit dans la demande de brevet français N° 2070713, un signal de correction est élaboré à partir d'une information emmagasinée dans une mémoire de signaux, et des moyens d'interpolation sont prévus pour engendrer un signal de correction qui correspond à une moyenne pondérée d'information relative à des zones contiguës de la zone explorée, la pondération de ces signaux étant proportionnelle à la position relative du spot de balayage à chaque instant par rapport aux quatre centres des quatre zones contiguës.

Si ces exemples de réalisation des moyens d'atténuation des discontinuités entre signaux de correction contribuent bien à éviter le phénomène de rapprochement ou d'éloignement brusque des lignes, ils laissent par contre entier un autre problème qui est dû à la présence de ruptures de dérivées lors des transitions entre signaux de correction. En effet, la méthode de filtrage par intégration atténue seulement l'écart d'amplitudes entre deux signaux de correction successifs, mais laisse subsister des fronts lors des transitions entre signaux de correction successifs. La méthode de filtrage au moyen de filtres du type R.C. atténue à la fois l'écart d'amplitude et les fronts entre signaux de correction successifs. Cependant, elle n'atténue pas parfaitement ces fronts, car elle maintient la présence de ruptures de dérivées lors des transitions.

Or, ces ruptures de dérivées ont des conséquences néfastes sur le comportement de certains éléments constitutifs de l'analyseur.

La présente invention a pour but d'éviter cet inconvénient. Elle a en effet pour objet un dispositif de correction spatiale pour analyseur d'images dans lequel les transitions entre signaux de correction se font sans ruptures de dérivées, et donc de manière pratiquement insensible pour les éléments constitutifs de l'analyseur d'images.

Selon l'invention, le dispositif de correction spatiale pour analyseur d'images comportant un support de restitution d'images couplés à des moyens de balayage de ce support, et comportant également une mémoire dite mémoire de correction apte à stocker pour chacun des MN rectangles résultant d'un quadrillage du support de restitution d'images de l'analyseur en M groupes de L lignes chacun et en N colonnes, un signal prédéterminé de correction associé à ce rectangle, un séquenceur pour assurer l'application de ces signaux de correction lors du passage des moyens de balayage par les rectangles correspondants du support de restitution d'images, et des moyens d'interpolation pour calculer les valeurs intermédiaires des signaux de correction devant être appliquées lors du passage des moyens de balayage par chacune des L lignes d'un rectangle donné est caractérisé en ce que les moyens d'interpolation calculent les valeurs intermédiaires des signaux de correction, de manière à éviter les ruptures de dérivées des signaux de correction lors des transitions entre ce rectangle et les rectangles adjacents situés sur une même colonne, et en ce que les moyens d'interpolation comportent des moyens pour restituer successivement, lors du passage des moyens de balayage par la portion de ligne de coordonnées q, m, n, les valeurs des signaux de correction mémorisées dans la mémoire de correction et associées à $2P-1$ rectangles (avec P entier $\geqslant 0$) situés de part et d'autre du rectangle de coordonnées m, n auquel appartient la portion de ligne de coordonnées q, m, n, des moyens pour mémoriser 2P coefficients de lissage associés à chaque portion de ligne q d'un rectangle m, n donné, et pour restituer successivement ces 2P coefficients lors du passage des moyens de balayage par les points de coordonnées q, m, n, et des moyens pour calculer la somme des 2P signaux de correction ainsi restitués, pondérés par les coefficients de lissage correspondant ainsi restitués, ces derniers moyens fournissant le signal de sortie des moyens d'interpolation.

Les objets et caractéristiques de la présente invention apparaîtront plus clairement à la lecture de la description suivante d'un exemple de réalisation, ladite description étant faite en relation avec les dessins ci-annexés dans lesquels:

la fig. 1 représente un dispositif de correction spatiale conforme à l'invention;

la fig. 2 est un diagramme représentant l'allure des transitions entre signaux de correction avec un dispositif de correction spatiale conforme à l'invention.

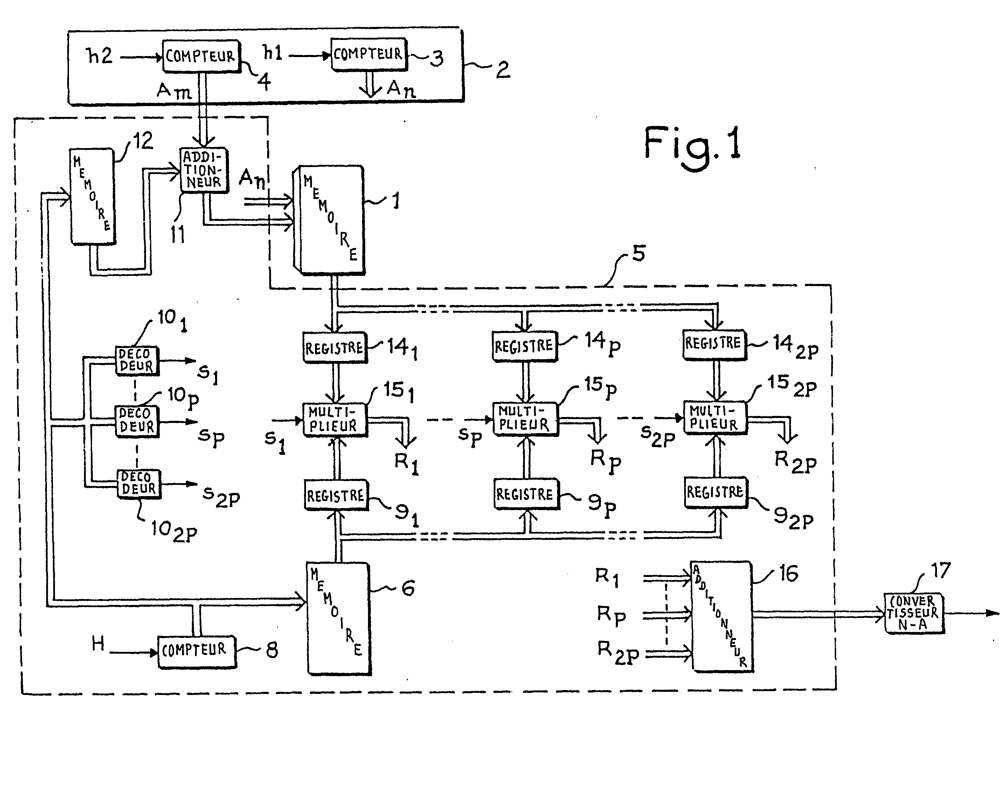

Le dispositif de convergence représenté sur la fig. 1 comporte une première mémoire 1, dite mémoire de correction, destinée à mémoriser des valeurs prédéterminées de signaux de correction associées à différentes zones de la surface du support de restitution de l'image, et devant être appliquées soit aux moyens de balayage de l'analyseur d'images, s'il s'agit d'une correction de convergence ou de géométrie, soit aux moyens de génération de l'image restituée, s'il s'agit d'une correction de tache, lors du passage des moyens de balayage par ces différentes zones. Ces différentes zones résultent d'un quadrillage de la surface du support de restitution de l'image suivant M groupes de L lignes chacun et suivant N colonnes. Aux MN rectangles ainsi définis sont associées des valeurs prédéterminées de signaux de correction. A titre d'exemple, dans le cas d'une prise de vue à 625 lignes, la surface du support de restitution de l'image est quadrillée suivant 13 colonnes (N=13) et suivant 14 groupes de 20 lignes chacun (M=14 et L=20).

La présente invention n'a pas pour objet la détermination des valeurs à attribuer aux signaux de correction, mais l'application de ces signaux à l'analyseur d'images. C'est pourquoi la façon dont sont obtenus les signaux de correction ne sera pas décrite de manière plus détaillée.

Le dispositif de correction spatiale comporte également un séquenceur 2 comportant lui-même un premier compteur 3 et un second compteur 4 d'adressage de la mémoire de correction.

Le premier compteur 3 est incrémenté par un signal d'horloge $h_1$ de fréquence Nf, f désignant la fréquence de balayage ligne du support de restitution de l'image. Le second compteur 4 est incrémenté par un signal d'horloge $h_2$ de fréquence $\dfrac{f}{L}$.

Le premier compteur 3 est un compteur modulo N, muni de sorties $A_n$ (avec n variable de 0 à la partie entière de $\log_2 N$) fournissant les éléments binaires de poids faible d'adressage de la mémoire de correction. Le second compteur 4 est un compteur modulo M muni de sorties $A_m$ (avec m variable de 0 à la partie entière de $\log_2 M$) fournissant les éléments binaires de poids fort d'adressage de la mémoire de correction.

Le dispositif de correction spatiale comporte également des moyens 5 d'interpolation pour calculer les valeurs intermédiaires des signaux de correction devant être appliquées à chacune des L lignes d'un rectangle donné.

Les moyens d'interpolation 5 comportent une seconde mémoire 6, dite mémoire de lissage, destinée à stocker 2P valeurs prédéterminées de coefficients de lissage associées à chacune des L lignes de chacun des MN rectangles formant le quadrillage précité (avec P entier $\geqslant 0$). La mémoire de lissage 6 est munie d'entrées d'adresse reliées aux sorties d'un troisième compteur 8 modulo 2P incrémenté par un signal d'horloge H synchrone du signal d'horloge $h_1$ et représentant, au cours de chaque période du signal $h_1$, une série de 2P impulsions ayant chacune une durée au moins égale au temps d'accès en lecture de la mémoire de lissage (ou de la mémoire de correction). Les sorties de la mémoire de lissage sont reliées aux entrées de 2P registres $9_1$ à $9_{2P}$ munis chacun d'une entrée d'horloge reliée à la sortie d'un décodeur 10p de la valeur p (avec p variable de 1 à 2P). Les décodeurs 10p sont munis chacun d'entrées reliées aux sorties du compteur 8 et d'une sortie fournissant un signal $s_p$.

Les moyens d'interpolation 5 comportent également un circuit d'adressage de la mémoire de correction. Ce circuit d'adressage comporte un additionneur 11 muni de premières entrées reliées aux sorties du second compteur 4 et de secondes entrées reliées aux sorties d'une troisième mémoire 12, dite mémoire d'adressage successif de la mémoire de correction, munie elle-même d'entrées d'adresse reliées aux sorties du compteur 8. Dans la mémoire 12 sont inscrites en séquence les valeurs $-P$, $-(P-1)$, ..., $-1$, 0, $+1$, ..., $P-2$, $P-1$. Les entrées d'adresse de la mémoire de correction 1 sont reliées aux sorties juxtaposées du compteur 3 et de l'additionneur 11.

Les moyens d'interpolation 5 comportent également un ensemble de 2P registres $14_p$ (avec p variable de 1 à 2P) munis d'entrées de données reliées aux sorties de la mémoire de correction et d'entrées d'horloge connectées respectivement aux sorties des décodeurs $10_p$.

Les moyens d'interpolation 5 comportent également un ensemble de 2P multiplieurs $15_p$, munis chacun de premières et de secondes entrées connectées respectivement aux sorties des registres 9p et 14p, et d'une sortie fournissant un signal $R_p$, et un additionneur 16 muni de 2P entrées connectées respectivement aux sorties des multiplieurs $15_1$ à $15_{2P}$.

Le dispositif de correction spatiale comporte également un convertisseur numérique analogique 17 inséré entre les sorties de l'additionneur 16 et l'entrée de l'élément de l'analyseur d'images auquel doivent être appliqués les signaux de correction.

Le dispositif de correction spatiale représenté sur la fig. 1 fonctionne de la façon suivante.

Pour une valeur donnée de m (m variable de 1 à M) et pour une valeur donnée de n (n variable de 1 à N), on lit dans la mémoire de correction 1 les valeurs des signaux de correction associées au rectangle correspondant du support de restitution de l'image, l'ordre de lecture des signaux de correction dans la mémoire de correction étant déterminé par la priorité du balayage horizontal sur le balayage vertical, c'est-à-dire par la priorité d'évolution de la variable n sur la variable m. Les discontinuités existant entre les signaux de correction associés à deux colonnes adjacentes situées sur un même groupe de lignes sont naturellement atténuées du fait que le balayage se fait suivant les lignes, soit par les moyens de balayage, soit par tous autres moyens filtrant habituellement les discontinuités des signaux. En revanche, les discontinuités existant entre les signaux de correction associés à deux groupes de lignes adjacents situés sur une même colonne ne peuvent être atténuées de cette façon. C'est pourquoi le dispositif de correction spatiale conforme à la présente invention est pourvu de moyens d'interpolation 5 destinés à prédire l'évolution du signal de correction d'une ligne à l'autre d'un rectangle donné. Ces moyens d'interpolation fonctionnent de la façon suivante.

Pour des valeurs données de m et de n, c'est-à-dire pour un rectangle donné et pour une valeur donnée du signal de correction associée à ce rectangle par la mémoire de correction, une valeur particulière du signal de correction est calculée pour chaque valeur de q (avec q variable de 1 à L), c'est-à-dire pour chacune des L lignes du groupe de lignes de numéro m considéré.

Soit $x_{q, m, n}$ la valeur du signal de correction associé à la ligne de numéro q appartenant au groupe de lignes de numéro m situé sur la colonne numéro n. Cette valeur n'est pas fournie par la mémoire de correction, mais elle est calculée par les moyens d'interpolation conformes à l'invention d'après la formule suivante.

Soit $x_{m,n}$ la valeur du signal de correction associé au groupe de lignes de numéro m situé sur la colonne de numéro n.

Soient également $x_{m-P, n}$, $x_{m-(P-1), n}$, etc., $x_{m-1, n}$ d'une part, et $x_{m+1, n}$ ... $x_{m+P, n}$, $x_{m+P+1, n}$ les valeurs des signaux de correction mémorisées dans la mémoire de correction et associées à 2P−1 rectangles de coordonnées m−P, n m−(P−1), n ... m−1, n, d'une part et m+1, n ... m+P, n m+P+1, n, d'autre part, situés de part et d'autre du rectangle de coordonnées m, n sur la même colonne n. Soient également $a_{pqm}$ (avec p variable de 1 à 2P) les 2P valeurs des coefficients de lissage associés à la ligne numéro q du groupe de lignes numéro m par la mémoire de lissage.

Conformément à l'invention, le signal de correction intermédiaire affecté à la ligne q du groupe de lignes numéro m situé sur la colonne numéro n s'écrit:

$$x_{qmn} = a_{1qm} x_{m-P, n} + a_{2qm} x_{m-(P-1), n} + \cdots$$
$$+ a_{Pqm} x_{m-1, n} + a_{P+1, qm} x_{m, n} + a_{P+2, qm} x_{m+1, n} + \cdots$$
$$+ a_{2P-1, qm} x_{m+P, n} + a_{2P, qm} x_{m+P+1, n}$$

Pour cela, lorsque, au cours d'une période du signal d'horloge de fréquence Nf, le séquenceur 2 atteint les valeurs $A_m$ et $A_n$ correspondant à l'adresse dans la mémoire de correction du signal de correction $x_{m\,n}$ associé au rectangle de coordonnées m n, l'additionneur 11 fournit successivement les 2P adresses dans la mémoire de correction du signal de correction associé au rectangle de coordonnées m, n et des signaux de correction associés aux 2P−1 rectangles situés de part et d'autre du rectangle m n considéré sur la même colonne n. Au cours de la même période du signal d'horloge $h_1$, les 2P adresses ainsi obtenues sont utilisées successivement pour adresser la mémoire de correction qui fournit alors les signaux de correction associés aux 2P rectangles situés sur la même colonne n, ces signaux étant stockés dans les registres 14p activés successivement au rythme d'adressage de la mémoire de correction grâce au décodeur 10p et au compteur 8 incrémenté par le signal d'horloge H.

Pendant cette même période du signal d'horloge $h_1$, la mémoire de lissage est adressée successivement 2P fois pour fournir les 2P coefficients de lissage $a_{pqm}$ associés à la portion de ligne dont les coordonnées qmn correspondent à la période considérée du signal d'horloge $h_1$.

Ces 2P coefficients sont stockés successivement dans les registres $9_p$, au rythme d'adressage de la mémoire d'interpolation, grâce au compteur 8 et aux décodeurs 10p.

Disposant alors simultanément des signaux de correction stockés dans les registres $14_p$ et des coefficients de lissage stockés dans les registres $9_p$, on peut, suivant la formule précitée, calculer le signal de correction associé à la portion de ligne considérée. C'est le rôle des multiplieurs $15_p$ et de l'additionneur 16.

Les coefficients de lissage a sont déterminés soit automatiquement, soit manuellement, de manière à reproduire l'allure de la courbe choisie pour représenter l'évolution du signal de correction entre les points de passage obligés correspondant aux valeurs stockées dans la mémoire de correction.

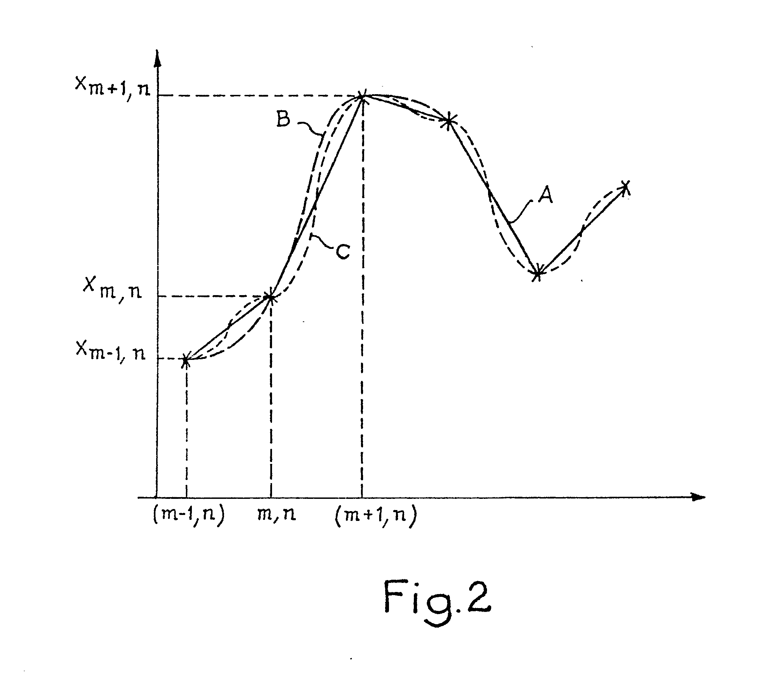

La fig. 2 montre trois exemples de courbes reliant des valeurs des signaux de correction stockées dans la mémoire de correction, ces valeurs étant représentées par des croix.

Un premier exemple de courbe, correspondant à la courbe A, représentée en traits pleins, correspond à une interpolation linéaire, qui ne nécessite que la connaissance de deux signaux de correction: $x_{m, n}$ et $x_{m-1, n}$, ou encore $x_{m, n}$ et $x_{m+1, n}$, et la mémorisation des deux coefficients de lissage associés. Cet exemple est peu intéressant en pratique puisque, comme on l'a vu précédemment, il laisse subsister des ruptures de dérivées lors des transitions.

Un deuxième exemple de courbe, correspondant à la courbe B représentée en traits pointillés larges, correspond à une interpolation à l'aide d'une courbe en S, c'est-à-dire telle que les tangentes à la courbe d'évolution du signal de correction aux points de transition soient horizontales. Cet exemple nécessite la connaissance de plus de deux valeurs des signaux de correction situés de part et d'autre de la ligne considérée, et donc, la mémorisation de plus de deux coefficients de lissage par ligne. Cet exemple est plus intéressant en pratique, car il évite la présence de ruptures de dérivées aux points de transition. Il peut toutefois présenter l'inconvénient de ne pas refléter de manière très exacte l'évolution du signal de correction entre deux points de transition. Un remède peut être trouvé à cette situation en accroissant le nombre de valeurs de signaux de correction situés de part et d'autre de la ligne considérée, et pris en compte dans le calcul, ainsi que le nombre de coefficients de lissage associés. C'est ce que montre un troisième exemple de courbe, représentée en traits pointillés étroits (courbe C), qui correspond à une interpolation avec prédiction de tangence aux points de transition.

Il apparaît clairement que plus la précision souhaitée pour l'évolution du signal de correction entre les points de transition est grande, plus la réalisation du dispositif de correction spatiale devient complexe (accroissement de la capacité de la mémoire d'interpolation, du nombre de registres, de multiplieurs...) et nécessite des composants à vitesse de travail élevée (l'interpolation devant toujours avoir lieu pendant la même durée alors qu'elle devient plus complexe et donc plus longue), d'où la nécessité d'un compromis entre les performances souhaitées et les moyens dont on dispose.

Sans sortir du cadre de l'invention, il est possible d'apporter au dispositif décrit un certain nombre de variantes.

Par exemple, on peut envisager d'effectuer la somme pondérée des signaux de correction non plus au moyen d'autant de multiplieurs que de signaux de correction à prendre en compte, mais au moyen d'un seul multiplieur utilisé de manière séquentielle.

On peut également envisager d'accroître le nombre de signaux de correction stockés dans la mémoire de correction en prenant en considération des variables supplémentaires telles que la trame ou le type de défaut à corriger.

## Revendications

1. Dispositif de correction spatiale pour analyseur d'images comportant un support de restitution d'images couplé à des moyens de balayage de ce support, comportant également une mémoire (1) dite mémoire de correction, apte à stocker, pour chacun des MN rectangles résultant d'un quadrillage du support de restitution d'images de l'analyseur en M groupes de L lignes chacun et en N colonnes, un signal prédéterminé de correction associé à ce rectangle, un séquenceur (2) pour assurer l'application de ces signaux de correction lors du passage des moyens de balayage par les rectangles correspondants du support de restitution d'images, et des moyens d'interpolation (5) pour calculer les valeurs intermédiaires des signaux de correction devant être appliquées lors du passage des moyens de balayage par chacune des L lignes d'un rectangle donné, caractérisé en ce que les moyens d'interpolation (5) calculent les valeurs intermédiaires des signaux de correction de manière à éviter les ruptures de dérivées des signaux de correction lors des transitions entre ce rectangle et les rectangles adjacents situés sur une même colonne, et en ce que les moyens d'interpolation (5) comportent des moyens pour restituer successivement, lors du passage des moyens de balayage par la portion de ligne de coordonnées q, m, n, les valeurs des signaux de correction mémorisées dans la mémoire de correction et associées à $2P-1$ rectangles (avec P entier $\geqslant 0$) situés de part et d'autre du rectangle de coordonnées m, n auquel appartient la portion de ligne de coordonnées q, m, n, des moyens pour mémoriser 2P coefficients de lissage associés à chaque portion de ligne q d'un rectangle m, n donné, et pour restituer successivement ces 2P coefficients lors du passage des moyens de balayage par les points de coordonnées q, m, n, et des moyens pour calculer la somme des 2P signaux de correction ainsi restitués, pondérés par les coefficients de lissage correspondant ainsi restitués, ces derniers moyens fournissant le signal de sortie des moyens d'interpolation.

2. Dispositif selon la revendication 1, dans lequel le séquenceur comporte un premier compteur (3) modulo N, incrémenté par un signal d'horloge de fréquence Nf, où f désigne la fréquence de balayage ligne, et un second compteur (4) modulo M, incrémenté par un signal d'horloge de fréquence $\frac{f}{L}$, caractérisé en ce que les moyens pour restituer successivement les valeurs de $2P-1$ signaux de correction comportent premièrement un additionneur (11) muni de premières entrées reliées aux sorties du second compteur (4) modulo M et de secondes entrées, deuxièmement une mémoire (12) dite mémoire d'adressage successif de la mémoire de correction, dans laquelle sont inscrites en séquence les 2P valeurs $-P$, $-(P-1)$, ...,$-1$, $0$, $+1$, ..., $P-2$, $P-1$, munie d'entrées d'adresse reliées aux sorties d'un compteur (8) modulo 2P, incrémenté 2P fois au cours d'une même période du signal d'horloge de fréquence Nf, et de sorties reliées aux secondes entrées de l'additionneur (11), et troisièmement 2P premiers registres (14$_p$) connectés aux sorties de la mémoire de correction et activés respectivement lorsque le compteur 8 modulo 2P est incrémenté pour la p$^{ième}$ fois.

3. Dispositif selon les revendications 1 et 2, caractérisé en ce que les moyens pour mémoriser les 2P coefficients de lissage associés à chaque portion de ligne de coordonnées q, m, n et pour les restituer successivement lors du passage des moyens de balayage par cette portion de ligne comportent une mémoire (6), dite mémoire de lissage, adressée par un compteur (8) modulo 2P, incrémenté 2P fois au cours d'une même période du signal d'horloge de fréquence Nf, et 2P seconds registres ($9_p$) connectés aux sorties de la mémoire de lissage et activés respectivement lorsque le compteur (8) modulo 2P est incrémenté pour la $p^{ième}$ fois.

4. Dispositif selon l'une des revendications 2 ou 3, caractérisé en ce que les moyens pour effectuer la somme pondérée des signaux de correction comportent 2P multiplieurs ($15_p$) munis d'entrées reliées respectivement aux sorties des premiers et des seconds registres, et un additionneur (16) muni de 2P entrées reliées aux sorties des 2P additionneurs.

## Patentansprüche

1. Vorrichtung zur räumlichen Korrektur für einen Bildanalysator, mit einem Bildwiedergabeträger, der angekoppelt ist an Mittel zur Ablenkung über diesen Träger, ferner versehen mit einem Speicher (1), der als Korrekturspeicher bezeichnet wird und dazu geeignet ist, für jedes der MN Rechtecke, die sich aus einer Rastereinteilung des Bildwiedergabeträgers des Analysators in M Gruppen zu jeweils L Zeilen und N Spalten ergeben, ein vorbestimmtes Korrektursignal zu speichern, welches diesem Rechteck zugeordnet ist, mit einer Folgesteuerung (2) zur Gewährleistung des Anlegens dieser Korrektursignale beim Überstreichen der entsprechenden Rechtecke des Bildwiedergabeträgers durch die Ablenkmittel sowie mit Interpolationsmitteln (5) zur Berechnung der Zwischenwerte der Korrektursignale, die angelegt werden müssen, wenn die Ablenkmittel über jede der L Zeilen eines gegebenen Rechtecks hinweggehen, dadurch gekennzeichnet, dass die Interpolationsmittel (5) die Zwischenwerte der Korrektursignale derart berechnen, dass das Abreissen von Ableitungen der Korrektursignale während der Übergänge zwischen diesem Rechteck und den benachbarten Rechtecken vermieden werden, welche in derselben Spalte liegen, und dass die Interpolationsmittel (5) Mittel umfassen, um nacheinander beim Überfahren des Zeilenteiles mit den Koordinaten q, m, n die in dem Korrekturspeicher gespeicherten Werte der Korrektursignale wiederzugeben, welche 2P−1 Rechtecken (mit P ganzzahlig und $\geq$ 0) zugeordnet sind und auf der einen bzw. anderen Seite des Rechtecks mit den Koordinaten m, n liegen, zu welchem der Zeilenteil mit den Koordinaten q, m, n gehört, und Mittel umfassen, um 2P Glättungskoeffizienten zu speichern, die jedem Zeilenteil q eines gegebenen Rechtecks m, n zugeordnet sind, und um nacheinander diese 2P Koeffizienten wiederzugeben während des Überfahrens der Punkte mit den Koordinaten q, m, n durch die Ablenkmittel, sowie Mittel umfassen, um die Summe der 2P so wiedergegebenen Korrektursignale zu berechnen, gewichtet mit den so wiedergegebenen entsprechenden Glättungskoeffizienten, wobei diese letzteren Mittel das Ausgangssignal der Interpolationsmittel liefern.

2. Vorrichtung nach Anspruch 1, bei welcher die Folgesteuerung einen ersten Modulo-N-Zähler (3) umfasst, der durch ein Taktsignal der Frequenz Nf inkrementiert wird, worin f die Zeilenablenkfrequenz bezeichnet, und einen zweiten Modulo-M-Zähler (4) enthält, der durch ein Taktsignal der Frequenz $\frac{f}{L}$ inkrementiert wird, dadurch gekennzeichnet, dass die Mittel zur aufeinanderfolgenden Wiedergabe der Werte von 2P−1 Korrektursignalen erstens einen Addierer (11) umfassen, der mit ersten Eingängen versehen ist, welche an die Anschlüsse des zweiten Modulo-M-Zählers (4) angeschlossen sind, und mit zweiten Eingängen versehen ist, zweitens einen Speicher (12) umfassen, der als Speicher zur aufeinanderfolgenden Adressierung des Korrekturspeichers bezeichnet wird und worin sequentiell die 2P Werte −P, −(P−1), ...,−1, 0, +1,..., P−2, P−1 eingeschrieben werden und der mit Adressiereingängen versehen ist, welche mit den Ausgängen eines Modulo-2P-Zählers (8) verbunden sind, der 2P mal im Verlaufe derselben Periode des Taktsignals der Frequenz Nf inkrementiert wird, und mit Ausgängen versehen ist, welche mit den zweiten Eingängen des Addierers (11) verbunden sind, und drittens 2P erste Register ($14_p$) umfassen, die mit den Ausgängen des Korrekturspeichers verbunden sind und jeweils aktiviert werden, wenn der Modulo-2P-Zähler (8) zum pten Mal inkrementiert wird.

3. Vorrichtung nach den Ansprüchen 1 und 2, dadurch gekennzeichnet, dass die Mittel zum Speichern der 2P Glättungskoeffizienten, die jedem Zeilenteil der Koordinaten q, m, n zugeordnet sind, und zum Wiedergeben derselben nacheinander beim Überfahren dieses Zeilenteils durch die Ablenkmittel einen Speicher (6) umfassen, der als Glättungsspeicher bezeichnet wird und welcher durch einen Modulo-2P-Zähler (8) adressiert wird, der 2P mal während derselben Periode des Taktsignals der Frequenz Nf inkrementiert wird, und 2P zweite Register ($9_p$) umfassen, die mit den Ausgängen des Glättungsspeichers verbunden sind und jeweils aktiviert werden, wenn der Modulo-2P-Zähler (8) zum pten Mal inkrementiert wird.

4. Vorrichtung nach einem der Ansprüche 2 oder 3, dadurch gekennzeichnet, dass die Mittel zum Bilden der gewichteten Summe der Korrektursignale 2P Multiplizierer ($15_p$) enthalten, welche mit Eingängen versehen sind, die jeweils mit den Ausgängen der ersten und der zweiten Register verbunden sind, und einen Addierer (16) enthalten, der mit 2P Eingängen versehen ist, welche mit den Ausgängen der 2P Addierer verbunden sind.

## Claims

1. Device for spatial correction for an image analyzer comprising an image restitution carrier coupled to means for scanning said carrier, likewise comprising a memory (1) designated correction memory and able for each of the MN rectangles resulting from a grating division of the image restitution carrier of the analyzer into M groups each of L lines and N columns to store a predetermined correction signal associated with said rectangle, a sequencer (2) for ensuring the application of said correction signals during the passage of the scanning means over the corresponding rectangles of the image restitution carrier, and interpolation means (5) for calculating the intermediate values of the correction signals which must be applied during the passage of the scanning means over each of the L lines of a given rectangle, characterized in that the interpolation means (5) calculate the intermediate values of the correction signals in a manner to avoid the ruptures of derivatives of the correction signals during the transitions between said rectangle and the adjacent rectangles situated in the same column, and that said interpolation means (5) include means for successively restituting during the passage of the scanning means over the line portion with coordinates q, m, n the values of the correction signals stored in the correction memory and associated with $2P-1$ rectangles (with p an integer and $\geqslant 0$) situated on either side of the rectangle with coordinates m, n to which the line portion with coordinates q, m, n belongs, means for storing 2P smoothing coefficients associated with each line portion q of a given rectangle m, n, and for successively restituting said 2P coefficients during the passage of the scanning means over the points with the coordinates q, m, n, and means for calculating the sum of the 2P correction signals thus restituted weighted with the corresponding smoothing coefficients thus restituted, said latter means furnishing the output signal of the interpolation means.

2. Device according to Claim 1 in which the sequencer comprises a first modulo N counter (3) incremented by a clock signal of frequency Nf, f denoting the line scan frequency, and a second modulo M counter (4) incremented by a clock signal of frequency $\frac{f}{L}$, characterized in that the means for successively restituting the values of $2P-1$ correction signals comprise firstly an adder (11) provided with first inputs connected to the terminals of the second modulo M counter (4), and second inputs, secondly a memory (12) designated memory for successive addressing of the correction memory to which are sequentially written the 2P values $-P, -(P-1), ..., -1, 0, +1, ..., P-2, P-1$ and which is provided with address inputs connected to the outputs of a modulo 2P counter (8) incremented 2P times in the course of the same period of the clock signal of frequency Nf, and outputs connected to the second inputs of the adder (11), and thirdly 2P first registers $(14_p)$ connected to the outputs of the correction memory and respectively activated when the modulo 2P counter (8) is incremented for the pth time.

3. Device according to Claims 1 and 2, characterized in that the means for storing the 2P smoothing coefficients associated with each liner portion of coordinates q, m, n and for restituting them successively during the passage of the scanning means over said line portion include a memory (6) which is referred to as smoothing memory and which is addressed by a modulo 2P counter (8) incremented 2P times during the same period of the clock signal of frequency Nf, and 2P second registers $(9_p)$ connected to the outputs of the smoothing memory and respectively activated when the modulo 2P counter (8) is incremented for the pth time.

4. Device according to one of Claims 2 or 3, characterized in that the means for forming the weighted sum of the correction signals comprise 2P multipliers $(15_p)$ provided with inputs connected respectively to the outputs of the first and second registers, and an adder (16) provided with 2P inputs connected to the outputs of the 2P adders.

Fig.1

Fig.2